# FASCICULE DE BREVET EUROPEEN

(11) **EP 1 409 305 B1**
(45) Date de publication et mention de la délivrance du brevet: **18.01.2006**
(21) Numéro de dépôt: 02767564.4
(22) Date de dépôt: 11.07.2002
(51) Int. Cl.: B60T 11/232

(54) **MAITRE-CYLINDRE A PENETRATION A COURSE MORTE**
HAUPTZYLINDER MIT REDUZIERTEM SPIEL
MASTER CYLINDER WITH REDUCED BACKLASH

(30) Priorité: 13.07.2001 FR 0109449
(43) Date de publication de la demande: 21.04.2004
(73) Titulaire: ROBERT BOSCH GMBH, 70442 Stuttgart (DE)
(72) Inventeur: LEBRET, Pierre, F-78000 Versailles (FR); BOURLON, Philippe, F-77230 Dammartin en Goele (FR)
(74) Mandataire: Hurwic, Aleksander Wiktor
(86) Numéro de dépôt international: PCT/FR2002/002444
(87) Numéro de publication internationale: WO 2003/006284

(56) Documents cités:
- EP-A- 0 918 005
- US-A- 4 934 250

## Description

La présente invention a trait, de façon générale, à un composant d'un système hydraulique de freinage pour véhicule automobile.

plus précisément, l'invention concerne un maître-cylindre à pénétration, du type de ceux qui comprennent au moins un corps percé d'un alésage cylindrique s'étendant suivant un axe de symétrie, un piston monté axialement coulissant dans l'alésage au moins entre une position de repos et une position de montée en pression, et une coupelle d'étanchéité présentant un repli maintenu fixe dans l'alésage, une lèvre appliquée de façon étanche sur une paroi cylindrique du piston pour délimiter une chambre de pression dans l'alésage, et un talon reliant la lèvre au repli, la paroi cylindrique du piston offrant une cavité pour la chambre de pression et étant percée d'au moins un premier orifice de réalimentation qui présente une première section transversale de surface déterminée et qui est adjacent au talon de la coupelle pour la position de repos du piston, dans laquelle ce premier orifice fait communiquer la chambre de pression avec un canal de réalimentation interne au corps et externe à la chambre.

Le document EP 0918 005 divulge le préambule de la revendication 1.

Des dispositifs de ce type sont bien connus dans l'art antérieur et utilisés avec satisfaction depuis de nombreuses années.

Cependant, l'évolution des circuits hydrauliques de freinage, aujourd'hui de plus en plus souvent équipés de systèmes d'anti-blocage des roues et / ou de contrôle dynamique du châssis utilisant des pompes hydrauliques à commande indépendante, fait apparaître de nouvelles contraintes sur la conception des maîtres-cylindres, et notamment des maîtres-cylindres à pénétration.

En particulier, lorsqu'une pompe intégrée à un circuit hydraulique de freinage est mise en mouvement, alors que le maître-cylindre est actionné, il est possible que le volume de liquide de frein présent dans le circuit de freinage haute pression et devant être ramené au réservoir basse pression au travers du maître cylindre soit tel que les pistons de ce dernier soit repoussés jusqu'à leur position de repos sans que la pression du liquide de frein dans le maître-cylindre ne redescende jusqu'à une valeur proche de la pression atmosphérique.

Dans ce cas, les coupelles d'étanchéité du maître-cylindre peuvent se déformer jusqu'à recouvrir les orifices de communication avec le réservoir basse pression, le maître-cylindre restant alors sous haute pression.

Pour éviter ce phénomène, il faut a priori déplacer chaque orifice de communication avec le réservoir basse pression en l'éloignant de la chambre de pression correspondante.

Or, cette mesure est elle-même gênante, puisqu'elle augmente la course morte des maîtres-cylindres ainsi re-dimensionnés.

Dans ce contexte, la présente invention a pour but de proposer un maître-cylindre à pénétration présentant à la fois une course morte réduite et une vitesse de réalimentation élevée de chaque chambre de pression.

A cette fin, le maître-cylindre de l'invention, par ailleurs conforme à la définition générique qu'en donne le préambule ci-dessus, est essentiellement caractérisé en ce qu'il comprend au moins un deuxième orifice présentant une deuxième section transversale de surface inférieure à la première, et en ce que les premier et deuxième orifices sont respectivement relativement proche et relativement éloigné de la lèvre de la coupelle pour la position de repos du piston, dans laquelle le deuxième orifice fait communiquer la chambre de pression avec le canal de réalimentation.

De préférence, les première et deuxième sections présentent un rapport de surface au moins égal à 6 et par exemple égal à 10.

Les premier et deuxième orifices peuvent être disjoints l'un de l'autre, auquel cas il sont, le cas échéant, angulairement décalés l'un de l'autre par rotation autour de l'axe de symétrie, ou ils peuvent au contraire communiquer l'un avec l'autre.

Dans ce dernier cas, le deuxième orifice présente avantageusement une forme allongée suivant une direction au moins sensiblement parallèle à l'axe de symétrie.

En pratique, il est utile de prévoir que les premier et deuxième orifices appartiennent respectivement à des premier et second ensembles d'orifices, chaque ensemble d'orifices présentant des orifices régulièrement répartis autour de l'axe de symétrie.

Le maître-cylindre de l'invention est particulièrement bien adapté à son application dans un système de freinage comprenant également une pompe hydraulique.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe d'un maître-cylindre connu ;
- la figure 2 est une vue en coupe schématique partielle du maître-cylindre de la figure 1, le piston étant représenté en position de repos et la coupelle dans sa forme initiale ;
- la figure 3 est une vue en coupe schématique partielle du maître-cylindre de la figure 1, le piston étant représenté en phase de retour vers sa position de repos sous l'action d'une pompe qui renvoie le liquide de frein dans le maître-cylindre en fonctionnement ABS, les coupelles étant déformées par la pression due à l'effort du conducteur ;
- la figure 4 est une vue en coupe schématique partielle d'un maître-cylindre conforme à un premier mode de réalisation de l'invention, le piston étant représenté en position de repos et la coupelle dans sa forme initiale ;
- la figure 5 est une vue en coupe schématique partielle du maître-cylindre illustré à la figure 4, le piston étant représenté en phase de retour vers sa position de repos sous l'action d'une pompe qui renvoie le liquide de frein dans le maître-cylindre en fonctionnement ABS, les coupelles étant déformées par la pression due à l'effort du conducteur ;
- la figure 6 est une vue en coupe schématique partielle d'un maître-cylindre conforme à un second mode de réalisation, le piston étant représenté en position de repos et la coupelle dans sa forme initiale ; et
- la figure 7 est une vue en coupe schématique partielle du maître-cylindre de la figure 6, le piston étant représenté en phase de retour vers sa position de repos sous l'action d'une pompe qui renvoie le liquide de frein dans le maître-cylindre en fonctionnement ABS, les coupelles étant déformées par la pression due à l'effort du conducteur ;
- la figure 8 est un diagramme représentant, en coordonnées arbitraires, l'évolution de la pression P dans la chambre de pression en fonction de la course x du piston à partir de sa position de repos.

Comme annoncé précédemment, l'invention concerne un maître-cylindre à pénétration, comprenant essentiellement un corps 1, un ou plusieurs pistons 2, et une ou plusieurs coupelles d'étanchéité 3.

Dans la mesure où l'agencement spécifiquement prévu par l'invention est applicable à tout ensemble piston - coupelle, la description qui suit ne tient aucun compte du nombre particulier de pistons qu'utilise le maître-cylindre décrit.

Le corps 1 est percé d'un alésage cylindrique 10 qui s'étend suivant un axe de symétrie X.

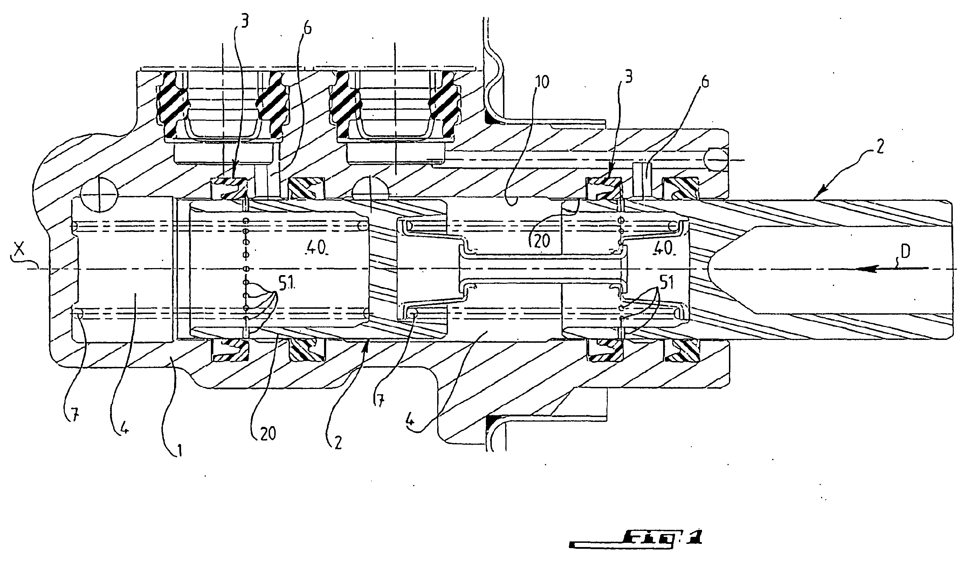

Le piston 2 est monté axialement coulissant dans l'alésage 10 et élastiquement sollicité vers une position de repos telle qu'illustrée à la figure 1, au moyen d'un ressort 7 précontraint en compression.

La coupelle d'étanchéité 3 présente un repli 31, une lèvre 32, et un talon 33 reliant la lèvre 32 au repli 31.

Le repli 31 est maintenu fixe dans l'alésage 10, par exemple lié à une pièce intermédiaire ou logé dans une gorge 11 de l'alésage 10, de manière à être solidaire de l'alésage en translation.

La lèvre 32 est appliquée de façon étanche sur la paroi cylindrique 20 du piston 2 pour délimiter, dans l'alésage 10, une chambre de pression 4.

Le piston 2 peut être déplacé de sa position de repos par application d'une force d'actionnement exercée suivant la direction D, et ainsi atteindre une position décalée suivant cette direction et dans laquelle la chambre de pression 4 est soumise à une pression croissante.

La paroi cylindrique 20 du piston forme une cavité 40 appartenant à la chambre de pression 4, et est percée d'orifices de réalimentation 51 se distribuant dans un plan perpendiculaire à l'axe X et présentant une section transversale de surface S1 (non référencée aux dessins) relativement importante.

Dans la position de repos du piston 2 (figure 1), chaque orifice 51 est adjacent au talon 33 de la coupelle 3 et disposé de façon telle qu'il fait communiquer la chambre de pression 4 avec un canal de réalimentation 6 interne au corps 1 et externe à la chambre 4.

L'agencement décrit jusqu'à présent, et connu dans l'art antérieur, donne toute satisfaction tant que la coupelle 3 ne subit aucune déformation parasite.

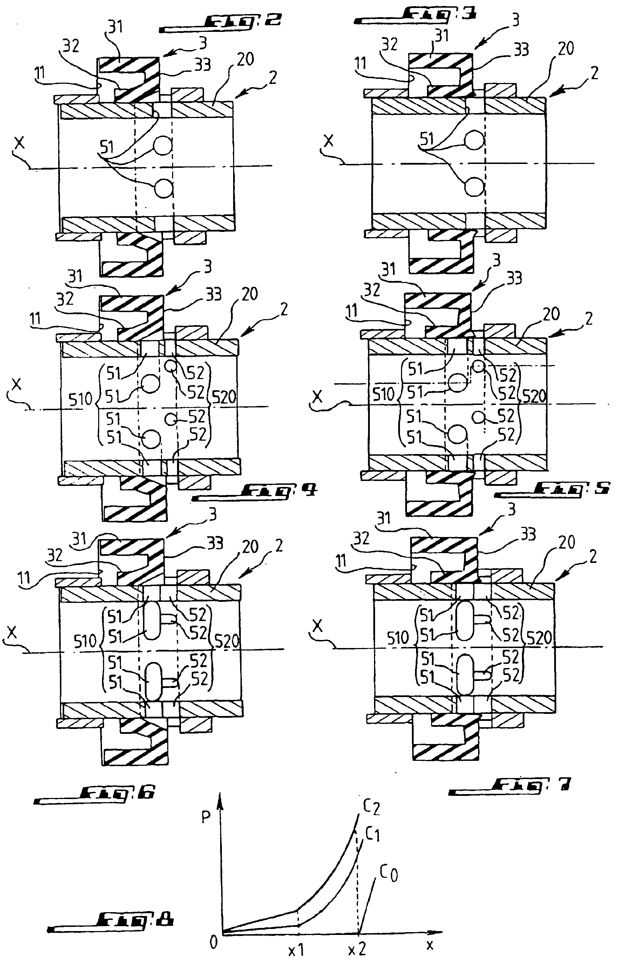

Dans ce cas en effet, comme le montre la figure 3, chaque orifice 51 se dégage suffisamment du talon 33 de la coupelle 3 pour ouvrir un passage adéquat entre l'intérieur et l'extérieur de la cavité 40 et permettre ainsi la réalimentation de la chambre de pression 4 en liquide de frein dans des conditions favorables.

Lorsqu'en revanche le piston 2 retourne à sa position de repos sous l'effet du débit d'une pompe alors que la chambre 4 est soumise à une pression exercée par le conducteur du véhicule, la lèvre 32 et le talon 33 de la coupelle 3 sont déformés, comme le montre la figure 3, de sorte que l'orifice 51 est partiellement ou totalement obturé, et que le liquide de frein à haute pression présent dans le maître-cylindre ne peut retourner au réservoir basse pression.

Pour remédier à ce défaut, la solution connue consiste à éloigner chaque orifice 51 de la chambre de pression correspondante, c'est-à-dire à décaler cet orifice vers la droite sur la figure 3.

Le problème est qu'un tel décalage augmente de façon substantielle la course morte du maître-cylindre.

L'invention vise à résoudre ce problème.

A cette fin, comme le montrent les figures 4 à 7, la paroi cylindrique 20 du piston 2 est percée d'orifices de réalimentation supplémentaires 52 qui se distribuent eux aussi par exemple dans un plan perpendiculaire à l'axe X, qui présentent une section transversale de surface S2 (non référencée aux dessins) relativement faible comparée à la surface S1 de la section transversale des orifices de réalimentation principaux 51, et qui font eux aussi communiquer la chambre de pression 4 avec le canal de réalimentation 6 dans la position de repos du piston 2, les orifices supplémentaires 52 étant plus éloignés de la lèvre 32 de la coupelle 3 que les orifices principaux 51.

Le terme "orifice de réalimentation", utilisé ici de façon générique pour désigner les orifices 51 et 52 ne doit pas être compris comme décrivant de façon limitative et spécifique la fonction de ces orifices, puisque les orifices supplémentaires 52 prévus par l'invention sont conçus au contraire pour une finalité première essentiellement différente.

Ce terme traduit simplement le fait que les ofirices supplémentaires 52 établissent, comme le font les orifices 51 dans des conditions normales, une communication entre le maître-cylindre et le réservoir de liquide de frein à basse pression, et que les orifices supplémentaires 52 participent donc aussi à la réalimentation du maître-cylindre en liquide de frein.

La surface S2 de la section de chaque orifice supplémentaire 52 est typiquement au plus égale au sixième de la surface S1 de la section de chaque orifice principal 51, et par exemple égale au dixième de la surface S1.

Comme le montrent les figures 4 et 5, les orifices supplémentaires 52 peuvent être disjoints des orifices principaux 51, auquel cas ils sont de préférence angulairement décalés, par rapport aux orifices principaux 51, par rotation autour de l'axe de symétrie X.

Néanmoins, les orifices supplémentaires 52 peuvent aussi, en variante, communiquer avec les orifices principaux 51 comme le montrent les figures 6 et 7.

Bien qu'il soit possible de ne prévoir qu'un seul orifice supplémentaire 52 dans le piston 2, les avantages développés par l'invention sont plus manifestes lorsque les orifices principaux 51 et supplémentaires 52 forment en réalité deux séries ou ensembles 510 et 520 d'orifices, chaque série ou ensemble étant formée d'orifices régulièrement répartis autour de l'axe de symétrie X.

Les caractéristiques de fonctionnement du maître-cylindre de l'invention, qui est particulièrement applicable aux systèmes de freinage comprenant une pompe hydraulique en complément de ce maître-cylindre, sont illustrées à la figure 8.

Sur cette figure, la courbe C0 représente l'évolution de la pression P dans la chambre de pression 4 lorsque le piston 2 est déplacé, sur une course "x" à partir de sa position de repos, à une vitesse infiniment lente.

La courbe C2 représente l'évolution de la pression P dans la chambre de pression 4 lorsque le piston 2 est déplacé, sur une course "x" à partir de sa position de repos, à une vitesse relativement élevée.

Et la courbe C1 représente l'évolution de la pression P dans la chambre de pression 4 lorsque le piston 2 est déplacé, sur une course "x" à partir de sa position de repos, à une vitesse moyenne.

Lorsque le piston 2 est déplacé à une vitesse infiniment lente (courbe C0), la chambre de pression 4 est en permanence en équilibre avec le canal dé réalimentation 6 aussi longtemps que les orifices supplémentaires 52 n'ont pas été intégralement bouchés par la lèvre 32 de la coupelle 3, ce qui ne se produit que pour une course relativement importante x2 du piston 2.

La pression P dans la chambre 4 ne peut donc croître que lorsque la course du piston 2 dépasse la valeur x2.

Lorsque le piston 2 est actionné rapidement (courbe C2), la pression P dans la chambre de pression 4 subit d'abord une évolution qui, bien que non nulle, est relativement lente tant que les orifices principaux 51 ne sont pas bouchés par la coupelle 3, la surface 51 de la section de ces orifices étant suffisamment importante pour permettre un flux rapide de liquide de frein entre la chambre de pression 4 et le canal 6 de réalimentation.

En revanche, dès que les orifices principaux 51 sont bouchés par la coupelle 3, ce qui se produit pour la course x1 du piston (courbe C2), la pression P dans la chambre de pression 4 évolue rapidement, la surface S2 de la section des orifices supplémentaires 52 ne permettant pas un flux de liquide de frein suffisant pour que la pression P dans la chambre 4 puisse s'équilibrer avec celle du canal de réalimentation 6.

La courbe C1, qui correspond à une situation intermédiaire entre celles qu'illustrent les courbes C0 et C2, se situe entre ces deux dernières courbes.

Les orifices supplémentaires 52 prévus par l'invention permettent ainsi d'assurer une bonne communication de la chambre de pression 4 avec le réservoir de liquide de frein à basse pression tout en réduisant à la valeur x1 la course morte que présente le maître-cylindre en régime dynamique (courbes C1 et C2, observées entre x1 et x2), l'évolution de la pression P dans la chambre 4 étant d'autant plus rapide que le piston 2 est actionné rapidement, et donc en particulier très satisfaisante en cas de freinage d'urgence.

## Revendications

1. Maître-cylindre à pénétration, comprenant au moins un corps (1) percé d'un alésage cylindrique (10) s'étendant suivant un axe de symétrie (K), un piston (2) monté axialement coulissant dans l'alésage (10) au moins entre une position de repos et une position de montée en pression, et une coupelle d'étanchéité (3) présentant un repli (31) maintenu fixe dans l'alésage (10), une lèvre (32) appliquée de façon étanche sur une paroi cylindrique (20) du piston (2) pour délimiter une chambre de pression (4) dans l'alésage (10), et un talon (33) reliant la lèvre (32) au repli (31), la paroi cylindrique (20) du piston offrant une cavité (40) pour la chambre de pression (4) et étant percée d'au moins un premier orifice de réalimentation (51) qui présente une première section transversale de surface déterminée et qui est adjacent au talon (33) de la coupelle (3) pour la position de repos du piston (2), dans laquelle ce premier orifice (51) fait communiquer la chambre de pression (4) avec un canal de réalimentation (6) interne au corps (1) et externe à la chambre (4), **caractérisé en ce qu'**il comprend au moins un deuxième orifice (52) présentant une deuxième section transversale de surface inférieure à la première, et **en ce que** les premier et deuxième orifices (51, 52) sont respectivement relativement proche et relativement éloigné de la lèvre (32) de la coupelle (3) pour la position de repos du piston (2), dans laquelle le deuxième orifice (52) fait communiquer la chambre de pression (4) avec le canal de réalimentation (6).

2. Maître-cylindre suivant la revendication 1, **caractérisé en ce que** les première et deuxième sections présentent un rapport de surface au moins égal à 6 et par exemple égal à 10.

3. Maître-cylindre suivant la revendication 1 ou 2,
**caractérisé en ce que** les premier et deuxième orifices (51, 52) sont disjoints l'un de l'autre.

4. Maître-cylindre suivant la revendication 1 ou 2,
**caractérise en ce que** les premier et deuxième orifices (51, 52) sont angulairement décalés l'un de l'autre par rotation autour de l'axe de symétrie (X).

5. Maître-cylindre suivant la revendication 1 ou 2,
**caractérisé en ce que** les premier et deuxième orifices (51, 52) communiquent l'un avec l'autre.

6. Maltre-cylindre suivant la revendication 5,
**caractérisé en ce que** le deuxième orifice (52) présente une forme allongée parallèlement à l'axe de symétrie (X).

7. Maître-cylindre suivant l'une quelconque des revendications précédentes, **caractérisé en ce que** les premier et deuxième orifices (51, 52) appartiennent respectivement à des premier et second ensembles (510, 520) d'orifices, chaque ensemble d'orifices présentant des orifices (51, 52) régulièrement répartis autour de l'axe de symétrie.

## Patentansprüche

1. Hauptzylinder mit Durchdringung, mit mindestens einem Körper (1), der von einer zylindrischen Bohrung (10) durchsetzt ist, die sich gemäß einer Symmetrieachse (X) erstreckt, einem Kolben (2), der in der Bohrung (10) so angebracht ist, dass er zumindest zwischen einer Ruhestellung und einer Druckaufbaustellung axial gleitet, und mit einer Dichtungsschale (3), die eine Falte (31) aufweist, welche fest in der Bohrung (10) gehalten ist, eine Lippe (32), die in dichter Weise an einer zylindrischen Wand (20) des Kolbens (2) anliegt, so dass sie eine Druckkammer (4) in der Bohrung (10) begrenzt, und einen Absatz (33), der die Lippe (32) mit der Falte (31) verbindet, wobei die zylindrische Wand (20) des Kolbens einen Hohlraum (40) für die Druckkammer (4) ausbildet und von mindestens einer Nachspeisungsöffnung (51) durchsetzt ist, welche einen ersten Querschnitt mit einer vorbestimmten Fläche aufweist und an den Absatz (33) der Schale (3) für die Ruhestellung des Kolbens (2) angrenzt, in welcher diese erste Öffnung (51) die Druckkammer (4) mit einem Nachspeisungskanal (6) verbindet, der sich im Körper (1) und außerhalb der Kammer (4) befindet, **dadurch gekennzeichnet, dass** er mindestens eine zweite Öffnung (52) aufweist, die einen zweiten Querschnitt mit einer kleineren Fläche als der erste Querschnitt aufweist, und dass die erste und die zweite Öffnung (51, 52) relativ nahe an bzw. relativ weit von der Lippe (32) der Schale (3) für die Ruhestellung des Kolbens (2) angeordnet sind, in welcher die zweite Öffnung (52) die Druckkammer (4) mit dem Nachspeisungskanal (6) verbindet.

2. Hauptzylinder nach Anspruch 1, **dadurch gekennzeichnet, dass** der erste und der zweite Querschnitt ein Flächenverhältnis haben, das mindestens 6 und zum Beispiel 10 beträgt.

3. Hauptzylinder nach Anspruch 1 oder 2, **dadurch gekennzeichnet, dass** die erste und die zweite Öffnung (51, 52) voneinander getrennt sind.

4. Hauptzylinder nach Anspruch 1 oder 2, **dadurch gekennzeichnet, dass** die erste und die zweite Öffnung (51, 52) durch Drehen um die Symmetrieachse (X) zueinander winkelmäßig versetzt sind.

5. Hauptzylinder nach Anspruch 1 oder 2, **dadurch gekennzeichnet, dass** die erste und die zweite Öffnung (51, 52) miteinander verbunden sind.

6. Hauptzylinder nach Anspruch 5, **dadurch gekennzeichnet, dass** die zweite Öffnung (52) eine Form aufweist, die parallel zur Symmetrieachse (X) langgestreckt ist.

7. Hauptzylinder nach einem der vorhergehenden Ansprüche, **dadurch gekennzeichnet, dass** die erste und die zweite Öffnung (51, 52) zu einer ersten bzw. einer zweiten Baugruppe (510, 520) gehören, wobei jede Öffnungsbaugruppe Öffnungen (51, 52) aufweist, die gleichmäßig um die Symmetrieachse verteilt sind.

## Claims

1. Penetration master cylinder, comprising at least a body (1) in which a cylindrical bore (10) is provided along an axis of symmetry (X), a piston (2) fitted for a sliding axial travel inside the bore (10), at least between a rest position and a pressure-rise position, and a sealing cup (3) having a long bent portion (31), stationarily housed inside a groove (11) provided in the bore (10), a lip (32) applied against a cylindrical wall (20) of the piston (2), in a sealing manner, so as to define a pressure chamber (4) inside the bore (10), and a bottom portion (33) joining the long bent portion (31) to the lip (32), wherein the cylindrical wall (20) of the piston provides a cavity (40), intended for the pressure chamber (4), and exhibits at least a first resupply port (51) having a determined first cross-sectional area and disposed adjacent to the bottom portion (33) of the cup (3) in the rest position of the piston (2), a position in which said first port (51) causes the pressure chamber (4) to communicate with a resupply passage (6), which is located inside the body (1) and outside the chamber (4), **characterised in that** it comprises at least a second port (52) having a smaller cross-sectional area than that of the first port, and **in that** the first and second ports (51, 52) are comparatively nearer and farther from the lip (32) of the cup (3), respectively, in the rest position of the piston (2), in which the second port (52) causes the pressure chamber (4) to communicate with the resupply passage (6).

2. Master cylinder according to claim 1, **characterised in that** the first and second cross-sectional areas have an area ratio at least equal to 6 and for example equal to 10.

3. Master cylinder according to claim 1 or claim 2, **characterised in that** the first and second ports (51, 52) are separated from each other.

4. Master cylinder according to claim 1 or claim 2, **characterised in that** the first and second ports (51, 52) are mutually angularly offset through a rotation about the axis of symmetry (X).

5. Master cylinder according to claim 1 or claim 2, **characterised in that** the first and second ports (51, 52) are interconnected.

6. Master cylinder according to claim 5,
**characterised in that** the second ports (52) has an elongated shape extended in a direction parallel to the symmetry axle (X).

7. Master cylinder according to any one of the preceding claims, **characterised in that** the first and second ports (51, 52) belong to a first and a second group (510, 520) of ports, respectively, each group of ports comprising evenly distributed ports (51, 52) about the axis of symmetry.
